# DEMANDE DE BREVET EUROPEEN

(11) **EP 2 107 656 A1**
(43) Date de publication de la demande: **07.10.2009**
(21) Numéro de dépôt: 09352002.1
(22) Date de dépôt: 23.03.2009
(51) Int. Cl.: H02G 3/04

(54) **Dispositif de fixation d'un chemin de câbles en fils sur une tige filetée**

(30) Priorité: 31.03.2008 FR 0801742; 12.01.2009 FR 0900103
(71) Demandeur: I.C.M. Group, 21500 Montbard (FR)
(72) Inventeur: Quertelet, Stéphane, 60190 Remy (FR); Warin, Ludovic, 60350 Jaulzy (FR)
(74) Mandataire: Santarelli

(57) **Abrégé**

Ce dispositif de fixation d'un chemin de câbles en fils sur une tige filetée (4) comporte:
- un corps (6) avec des moyens de support (12 ; 54 ; 12') présentant une première surface de support et une seconde surface de support opposée à la première surface de support,
- des moyens de fixation sur une tige filetée (4) comportant deux bras élastiques (8) munis chacun d'une encoche (20), le fond de l'encoche étant destiné à coopérer avec le filetage de la tige filetée (4) afin d'assurer un blocage du dispositif de fixation sur la tige filetée (4).

## Description

La présente invention concerne un dispositif de fixation d'un chemin de câbles en fils sur une tige filetée.

Le domaine de la présente invention est l'installation de chemins de câbles en fils. On utilise des chemins de câbles pour assurer le soutien, le logement et la protection d'éléments longilignes tels des câbles électriques mais également des fibres optiques ou bien encore des tubes, par exemple des tubes de liaison pneumatiques ou hydrauliques.

Un chemin de câbles en fils présente généralement une forme allongée et une section en U. Il comporte des fils longitudinaux, appelés aussi fils de chaîne, et des fils transversaux, appelé aussi fils de trame. Les fils de chaîne sont généralement rectilignes et les fils de trame présentent une forme en U. Les fils de trame sont soudés aux fils de chaîne et sont régulièrement espacés. Le chemin de câbles ainsi réalisé présente un fond destiné à servir de support aux câbles, ou similaires, et des parois latérales, ou ailes, destinées à maintenir les câbles ou similaires sur le fond du chemin de câbles.

Dans tout ce qui suit, dans un souci de simplification et de clarté, la description sera faite en référence à des câbles électriques. Toutefois, l'invention s'applique à tout autre type d'élément longiligne pouvant être supporté par un chemin de câbles en fils.

Un tel chemin de câbles est généralement disposé le long d'une paroi. Le plus souvent, les chemins de câbles sont installés en hauteur, sous un plafond, à l'aide d'un support. Deux types de montage sont le plus souvent utilisés pour réaliser une telle suspension.

Selon un premier type de montage, un pendard est fixé au plafond et celui-ci reçoit une ou plusieurs consoles servant de support aux chemins de câbles à suspendre. Le pendard est une pièce métallique profilée qui présente généralement une plaque de tête permettant sa fixation à l'aide de vis au plafond. Ce type de montage est utilisé pour les chemins de câbles destinés à recevoir une charge importante ou bien également lorsque plusieurs chemins de câbles sont prévus sur un même support.

Selon un autre type de montage, un chemin de câbles est simplement suspendu au plafond à l'aide de tiges filetées. Ce type de montage est intéressant car il est facile et rapide à mettre en oeuvre et présente un coût avantageux.

Le montage à l'aide de tiges filetées se fait principalement de deux manières. Dans un premier cas, le montage est dit en balancelle. On trouve alors au niveau d'une section du chemin de câbles une tige filetée de part et d'autre de ce chemin de câbles. Un support est alors monté à l'aide d'écrous sur les deux tiges filetées et le chemin de câbles vient reposer sur ce support. Le document EP-1 376 808 illustre un tel montage.

Il est également connu de faire un montage où les tiges de suspension sont disposées dans l'axe longitudinal du chemin de câbles. Un support est alors fixé sur une tige filetée et le chemin de câbles, traversé par ladite tige filetée, vient reposer sur le support.

Ces divers types de montage nécessitent l'utilisation d'écrous pour le montage des supports et demandent un certain temps de montage.

Il est également connu du document WO-2007/075054 d'utiliser un crochet monté sur une tige filetée pour la réalisation de la finition d'un plafond. Ce document révèle un dispositif de suspension comportant une unité de connexion crochet/tige filetée munie de trous traversant supérieurs et inférieurs et une unité de connexion de profilé qui s'étend en-dessous de l'unité de connexion crochet/tige filetée et qui permet le montage réversible d'un profilé.

Le document JP-02/113080U montre quant à lui un corps en U maintenu sur une tige filetée à l'aide de moyens élastiques et portant un crochet.

La présente invention a pour but de permettre un montage facile et rapide d'un chemin de câbles en fils sur une tige filetée. De préférence, un dispositif selon l'invention permettra un réglage continu de la position du chemin de câbles sur la tige filetée.

À cet effet, la présente invention propose un dispositif de fixation d'un chemin de câbles en fils sur une tige filetée, **caractérisé en ce qu**'il comporte :
- un corps avec des moyens de support présentant une première surface de support et une seconde surface de support opposée à la première surface de support,
- des moyens de fixation sur une tige filetée comportant deux bras élastiques munis chacun d'une encoche, dite première encoche, dont le fond est destiné à coopérer avec le filetage de la tige filetée afin d'assurer un blocage du dispositif de fixation sur la tige filetée.

Les deux surfaces de support opposées sont adaptées pour servir chacune d'appui à un fil de chaîne d'un chemin de câbles en fils. Ainsi, le dispositif grâce à ses bras élastiques permet une fixation rapide sur une tige filetée tandis que les surfaces de support adaptées à un chemin de câbles permettent de recevoir un chemin de câbles. Un dispositif de fixation, en adaptant les surfaces d'appui à la géométrie d'un chemin de câbles, permet alors de faire une liaison directe entre ledit chemin de câbles et une tige filetée.

Dans une forme de réalisation avantageuse pour la répartition des efforts sur la tige filetée et à l'intérieur du dispositif de fixation, les deux bras s'étendent de préférence chacun à partir du corps, dans des directions opposées. Selon cette forme de réalisation, on peut par exemple prévoir que le corps présente un dos sensiblement plan, que chaque bras présente une partie sensiblement plane inclinée par rapport au dos, et que l'extrémité libre de chaque bras présente une partie sensiblement plane s'étendant dans un plan sensiblement perpendiculaire au dos, cette dernière partie portant une première encoche. En variante, chaque bras peut présenter en outre une partie sensiblement plane et sensiblement parallèle au dos entre la partie inclinée et la partie perpendiculaire au dos. Dans cette forme de réalisation et ses variantes, les premières encoches sont de préférence orientées vers le dos du corps pour un meilleur maintien sur une tige filetée.

Pour obtenir un dispositif de fixation facile à fabriquer et ainsi bon marché, ce dispositif est réalisé avantageusement à partir d'une tôle découpée et pliée.

En ce qui concerne les moyens de support, le dispositif de fixation selon une première forme de réalisation de l'invention peut alors être tel que le corps comporte un dos sensiblement plan, deux retours parallèles s'étendant perpendiculairement au dos sensiblement plan de manière à former les deux surfaces de support. Chacun des deux retours présente par exemple à une extrémité une encoche, dite seconde encoche, destinée à recevoir un fil de chaîne d'un tronçon de chemin de câbles, et l'extrémité opposée de chaque retour présente un bossage permettant de réaliser un point dur pour réaliser un encliquetage.

Dans une seconde forme de réalisation des moyens de support d'un dispositif selon la présente invention, il est prévu que le corps comporte :
- un dos sensiblement plan,
- au moins un retour s'étendant perpendiculairement au dos et présentant à une extrémité une seconde encoche destinée à recevoir un fil de chaîne de manière à former la première surface de support, et
- au moins une patte s'étendant à partir du dos de manière à former la seconde surface de support.

En variante de réalisation avantageuse, la patte est obtenue par découpe dans le dos du corps. Cette patte peut aussi être munie d'un bossage de manière à permettre un encliquetage du dispositif de fixation sur un tronçon de chemin de câbles.

Selon une troisième forme de réalisation, le dispositif de fixation selon la présente invention est par exemple **caractérisé en ce que** le corps comporte un dos sensiblement plan dans lequel sont découpées au moins deux languettes qui sont repliées de manière à former des surfaces de support en formant un V avec le dos.

Dans les formes de réalisation prévoyant que le corps comporte un dos sensiblement plan, les premières encoches sont orientées par exemple vers le dos du corps.

Un dispositif de fixation selon la présente invention peut en outre comporter une languette d'appui disposée sensiblement dans l'alignement des deux premières encoches et pliée de telle sorte que son extrémité libre vienne coopérer avec le filetage de la tige filetée pour réaliser un troisième appui, à l'opposé des appuis réalisés sur la tige filetée au niveau des premières encoches.

La présente invention concerne également un ensemble formé par un dispositif de fixation et un tronçon de chemin de câbles en fils comportant des fils de chaîne longitudinaux et des fils de trame transversaux reliant les fils de chaîne, le chemin de câbles en fils présentant un fond destiné à recevoir des câbles électriques ou similaires et deux ailes latérales présentant chacune au moins deux fils de chaîne, **caractérisé en ce que** le dispositif de fixation est un dispositif de fixation tel que décrit plus haut, et en ce ledit dispositif de fixation est monté entre deux fils de chaîne voisins d'une aile latérale du chemin de câbles.

Des détails et avantages de la présente invention ressortiront mieux de la description qui suit, faite en référence aux dessins schématiques annexés sur lesquels :
La figure 1 est une vue en perspective d'un dispositif de fixation selon la présente invention,
La figure 2 représente le montage d'un tronçon de chemin de câbles à l'aide du dispositif de la figure 1,
La figure 3 montre à échelle agrandie et sous un angle différent le dispositif de la figure 1 lorsqu'il est utilisé pour la fixation d'un tronçon de chemin de câbles,
La figure 4 est une vue de détail de la figure 3, à échelle agrandie, illustrant le verrouillage du dispositif des figures 2 et 3 sur une tige filetée,
La figure 5 montre en perspective une variante de réalisation du dispositif de la figure 1,
La figure 6 illustre une autre variante de réalisation d'un dispositif selon l'invention, et
Les figures 7 à 10 sont des vues similaires aux vues des figures 1 à 4 respectivement et montrant une forme de réalisation préférée d'un dispositif selon l'invention.

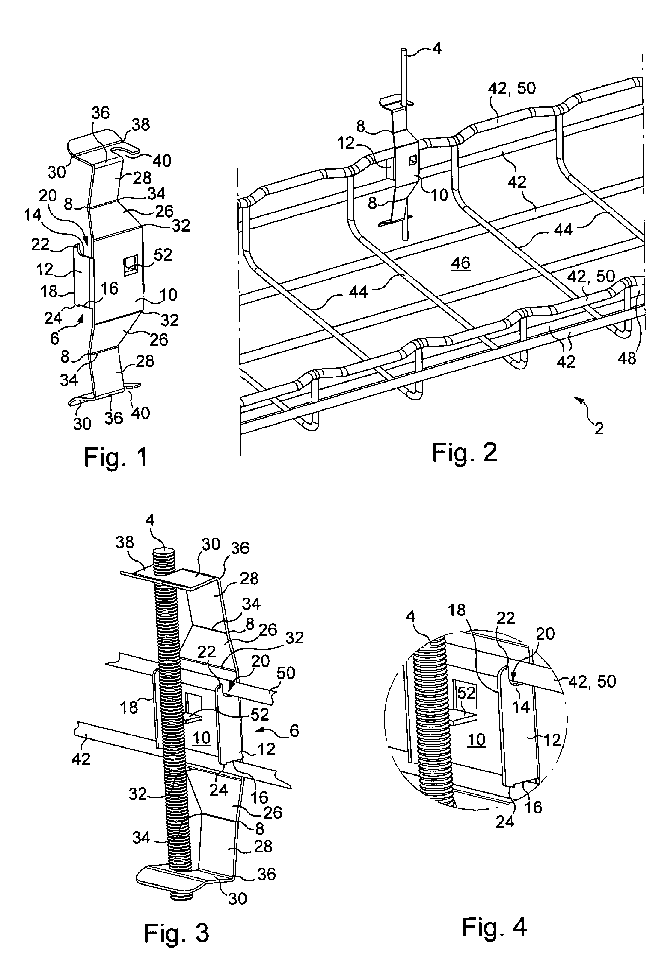

Les figures 1 à 4 montrent un premier mode de réalisation d'un dispositif de fixation d'un chemin de câbles en fils sur une tige filetée. Comme montré sur la figure 2, ce dispositif est destiné à permettre la fixation d'un tronçon de chemin de câbles 2 sur une tige filetée 4.

Le dispositif de fixation selon l'invention est de préférence réalisé à partir d'une tôle métallique découpée et pliée. C'est le cas pour les quatre formes de réalisation représentées sur les figures mais d'autres modes de réalisation pourraient être envisagés.

Le dispositif de fixation représenté sur les figures 1 à 4 comporte d'une part un corps central 6 et d'autre part des bras élastiques 8 s'étendant chacun à partir du corps central 6. Le corps central 6 est destiné notamment à permettre le support du tronçon de chemin de câbles 2 tandis que les bras élastiques 8 sont utilisés pour la fixation du dispositif sur la tige filetée 4.

Le corps central 6 présente une partie plane appelée par la suite dos 10. Cette partie plane est de forme rectangulaire. Deux bords opposés du dos 10 portent chacun un bras élastique 8.

On supposera dans la suite de la description que le dos 10 est disposé dans un plan sensiblement vertical et que les bras élastiques 8 s'étendent à partir du dos 10 pour l'un vers le haut et pour l'autre vers le bas. On a alors un bras élastique 8 supérieur et un bras élastique 8 inférieur.

Les bords du dos 10 qui ne portent pas les bras élastiques 8 sont appelés bords latéraux. Chaque bord latéral porte un bras support 12 formé par un retour s'étendant perpendiculairement par rapport au dos 10. Les deux bras supports 12 sont disposés symétriquement par rapport au dos 10 et sont identiques l'un à l'autre.

Chaque bras support 12, compte tenu de l'orientation retenue précédemment, présente un bord supérieur 14, un bord inférieur 16 et un bord libre 18 opposé au bord latéral du dos 10 auquel il est rattaché.

Le bord supérieur 14 de chaque bras support 12 présente une encoche 20 s'étendant sur la plus grande partie du bord supérieur 14. Dans la forme de réalisation représentée, pour faciliter notamment le pliage du bras support 12, l'encoche 20 s'étend depuis le dos 10 et définit ainsi du côté du bord libre 18 un doigt 22.

Le bord inférieur 16 de chaque bras support 12 est sensiblement rectiligne et présente à son extrémité libre (du côté du bord libre 18) un bossage 24.

Les deux bras élastiques 18 sont symétriques par rapport au dos 10. Seul le bras élastique 18 supérieur est alors décrit ci-après. Le bras élastique 18 supérieur représenté aux dessins est composé de trois parties : une partie inclinée 26, une partie sensiblement verticale appelée par la suite partie verticale 28 et une partie sensiblement horizontale appelée par la suite partie horizontale 30.

La partie inclinée 26 (du bras élastique 18 supérieur) s'étend à partir du bord supérieur du dos 10 et est inclinée vers la face du dos 10 se trouvant du côté des bras supports 12. Dans la première forme de réalisation représentée sur les dessins, cette partie inclinée 26 présente une forme trapézoïdale de telle sorte que le bras élastique 18 s'amincit en s'éloignant du dos 10 et forme une première pliure 32 avec le dos 10.

La partie verticale 28 prolonge la partie inclinée 26 et est séparée de cette dernière par une seconde pliure 34. Elle porte à son extrémité opposée à la partie inclinée la partie horizontale 30 qui est pliée environ à angle droit avec la partie verticale 28 de manière à s'éloigner du dos 10 et formant ainsi une troisième pliure 36.

La partie horizontale 30 présente une plus grande largeur que la partie verticale 28. Un bord latéral de la partie horizontale est dans le prolongement du bord latéral correspondant de la partie verticale tandis qu'à l'opposé, la partie horizontale présente un porte-à-faux 38 par rapport à la partie verticale 28. Une encoche 40 est réalisée dans le porte-à-faux 38 et débouche à côté de la troisième pliure 36. Cette encoche 40 est destinée à recevoir la tige filetée 4.

On remarque sur les figures 1 à 4 que le bord libre de la partie horizontale 30 est légèrement relevé si bien que la partie horizontale 30 présente plutôt la forme d'un dièdre. Cette forme est donnée ici pour permettre une meilleure préhension du bras élastique 18 par sa partie horizontale 30 pour le montage du dispositif de fixation, comme expliqué plus loin.

La figure 2 illustre l'utilisation du dispositif de fixation montré sur la figure 1 et décrit plus haut pour réaliser la fixation du tronçon de chemin de câbles 2 sur la tige filetée 4.

De manière classique et comme représenté sur la figure 2, le tronçon de chemin de câbles est en forme de gouttière et comporte des fils longitudinaux appelés fils de chaîne 42 et des fils transversaux appelés fils de trame 44. Les fils de chaîne 42 sont des fils rectilignes (sauf les fils de rive dans la forme de réalisation représentée qui sont toutefois sensiblement rectilignes). Les fils de trame 44 sont quant à eux en forme de U. Le tronçon de chemin de câbles 2 présente ainsi un panneau de fond 46 et deux panneaux latéraux 48. On suppose ici que le panneau de fond 46 est en position inférieure par rapport aux panneaux latéraux 48. Ce panneau de fond 46 est disposé dans un plan sensiblement horizontal tandis que les panneaux latéraux 48 s'étendent sensiblement verticalement. Une telle orientation est habituelle pour un tronçon de chemin de câbles et correspond à l'orientation choisie plus haut pour le dispositif de fixation. Toutefois, d'autres orientations peuvent être envisagées, avec par exemple le panneau de fond 46 disposé verticalement ou incliné.

Sur la figure 2, on reconnaît également la tige filetée 4. Cette dernière est par exemple vissée dans un plafond (non représenté) à l'aide d'une douille (non représentée). On suppose le plafond horizontal. La tige filetée 4 s'étend alors perpendiculairement, c'est-à-dire à la verticale, à partir du plafond, sous celui-ci.

Pour réaliser la fixation du tronçon de chemin de câbles 2, le dispositif de fixation est tout d'abord positionné sur ce tronçon. Comme illustré sur la figure 2, il est prévu de monter le dispositif de fixation sur un panneau latéral 48 du tronçon de chemin de câbles 2, entre deux fils de chaîne 42 voisins. Dans la forme de réalisation représentée, le panneau latéral 48 ne comportant que deux fils de chaîne 42, le dispositif de fixation est monté entre ces deux fils de chaîne 42, l'un d'eux étant un fil de rive 50.

Pour le montage du dispositif de fixation sur le tronçon de chemin de câbles 2, le dispositif de fixation est disposé à l'intérieur du tronçon et le fil de rive 50 est placé dans les encoches 20 des bras supports 12. Par pivotement du dispositif de fixation autour du fil de rive 50, le bord inférieur 16 de chaque bras support 12 vient reposer sur le fil de chaîne voisin. Grâce au bossage 24, cette mise en place passe par un point dur à surmonter permettant un encliquetage du dispositif de fixation dans sa position montée sur le tronçon de chemin de câbles 2.

De cette manière, le dispositif de fixation présente une première surface de support définie par les fonds des encoches 20 et une seconde surface de support définie par les bords inférieurs 16. Bien entendu, la distance séparant le fond des encoches 20 des bords inférieurs 16 correspondants est adaptée à la distance séparant deux fils de chaîne 42 voisins d'un panneau latéral 48 du tronçon de chemin de câbles 2. Le dispositif de fixation réalise donc un appui d'une part sur la face inférieure du fil de rive 50, ou de manière plus générale sur la face inférieure d'un fil de chaîne latéral supérieur, et d'autre part sur la face supérieure d'un fil de chaîne 42 voisin, ou fil de chaîne latéral inférieur.

Une fois le dispositif de fixation monté sur le tronçon de chemin de câbles 2, cet ensemble peut être monté sur la tige filetée 4. Cette dernière est alors introduite dans une encoche 40 de la partie horizontale 30 d'un bras élastique 18. Il convient alors de faire entrer la tige filetée 4 dans l'autre encoche 40 de l'autre bras élastique 18. Ceci est réalisé en tirant sur la partie horizontale 30 correspondante pour déformer le bras élastique 18 afin de permettre l'introduction de la tige filetée 4 dans l'autre encoche 40. Les profondeurs des encoches 40 et la géométrie du dispositif de fixation (inclinaison de la partie inclinée, longueur des bras élastiques, etc.) sont telles que lorsque la tige filetée 4 est introduite dans les deux encoches 40, chaque bras élastique 18 est déformé élastiquement de telle sorte que le fond de chaque encoche 40 vienne en appui sur la tige filetée 4. De la sorte, le fond de chaque encoche 40 vient se loger avec appui au fond du filetage de la tige filetée 4, assurant le maintien du dispositif de fixation et du tronçon de chemin de câbles 2 sur lequel il est monté sur la tige filetée 4.

Les figures 3 et 4 illustrent un appui supplémentaire du dispositif de fixation sur la tige filetée 4. Les fonds des encoches 40 agissent tous deux sur un même côté de la tige filetée 4. Il est proposé de réaliser un contre-appui du dispositif de fixation sur la tige filetée 4. Dans la forme de réalisation des figures 1 à 4, il est proposé de prévoir dans le dos 10 une languette 52 rabattue sensiblement alignée avec les encoches 40. Le montage du tronçon de chemin de câbles 2 peut alors être réalisé de la manière suivante sur la tige filetée 4. Le tronçon de chemin de câbles 2 est positionné tout d'abord sur la tige filetée 4 en venant appuyer l'extrémité libre de la languette 52 contre le filetage de la tige filetée 4. Les bras élastiques 18 sont alors déformés élastiquement l'un après l'autre pour faire pénétrer la tige filetée 4 dans les encoches 40. De la sorte, on réalise deux appuis -par les encoches 40- d'un côté de la tige filetée 4 et un appui -par la languette 52- du côté opposé. Un parfait maintien du dispositif de fixation sur la tige filetée 4 peut ainsi être effectué.

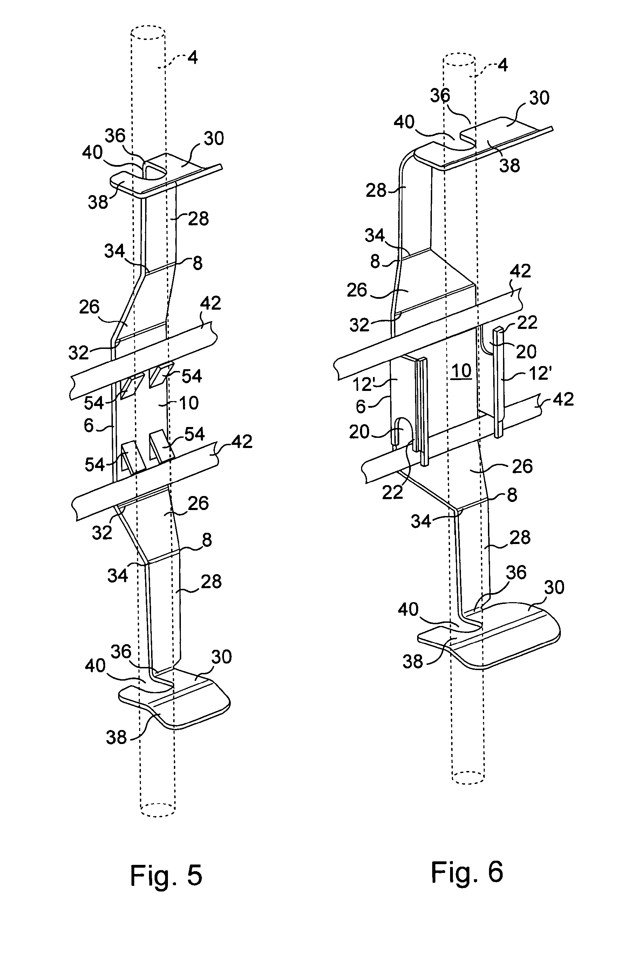

La figure 5 montre une variante de réalisation d'un dispositif de fixation selon la présente invention. Dans cette forme de réalisation, les appuis sur les fils de chaîne du tronçon de chemin de câbles 2 sont modifiés par rapport à la forme de réalisation des figures 1 à 4. Les références utilisées pour la première forme de réalisation sont à nouveau utilisées pour cette seconde forme de réalisation -et pour les autres formes de réalisation des figures 6 à 10- pour désigner les éléments communs à ces diverses formes de réalisation.

Sur la figure 5, par rapport à la première forme de réalisation décrite plus haut, on ne retrouve plus les bras supports. Toutefois, on retrouve des surfaces d'appui pour réaliser un appui d'une part sur une face inférieure d'un fil de chaîne supérieur et d'autre part sur une face supérieure d'un fil de chaîne inférieur.

Pour réaliser lesdites surfaces d'appui, des languettes 54 sont découpées dans le dos 10 et repliées à environ 45°. Dans la forme de réalisation représentée, on a quatre languettes 54. Deux languettes 54 sont pliées de manière à former avec le dos 10 un V ouvert vers le haut tandis que les deux autres languettes 54 sont pliées de manière à former avec le dos 10 un V ouvert vers le bas. Chaque V ainsi formé est destiné à recevoir entre ses branches un fil de chaîne 42.

Le montage de ce dispositif de fixation est sensiblement semblable au montage décrit plus haut en référence au premier mode de réalisation. On ne réalise pas ici d'encliquetage à l'aide de bossages mais un encliquetage par passage d'un point dur est réalisé ici de manière analogue.

La forme de réalisation de la figure 6 reprend des bras supports 12' pour la liaison entre le dispositif de fixation et le tronçon de chemin de câbles 2. Toutefois, les bras supports 12' ne sont pas montés symétriquement mais un bras support 12' est monté à l'envers par rapport à l'autre bras support 12'. On retrouve alors une encoche 20 d'un bras support 12' s'ouvrant dans le bord supérieur du bras support 12' correspondant tandis que l'encoche 20 de l'autre bras support 12' s'ouvre dans le bord inférieur de cet autre bras support 12'.

Le montage de ce dispositif de fixation diffère ici un peu du montage décrit en référence aux figures 1 à 4. En effet, il convient de présenter le dispositif de fixation en biais par rapport au tronçon de chemin de câbles de manière à introduire un fil de chaîne dans une encoche 20 et l'autre fil de chaîne dans l'autre encoche 20. Le dispositif de fixation est alors pivoté autour d'un axe sensiblement perpendiculaire au dos 10 pour prendre la position montrée sur la figure 6.

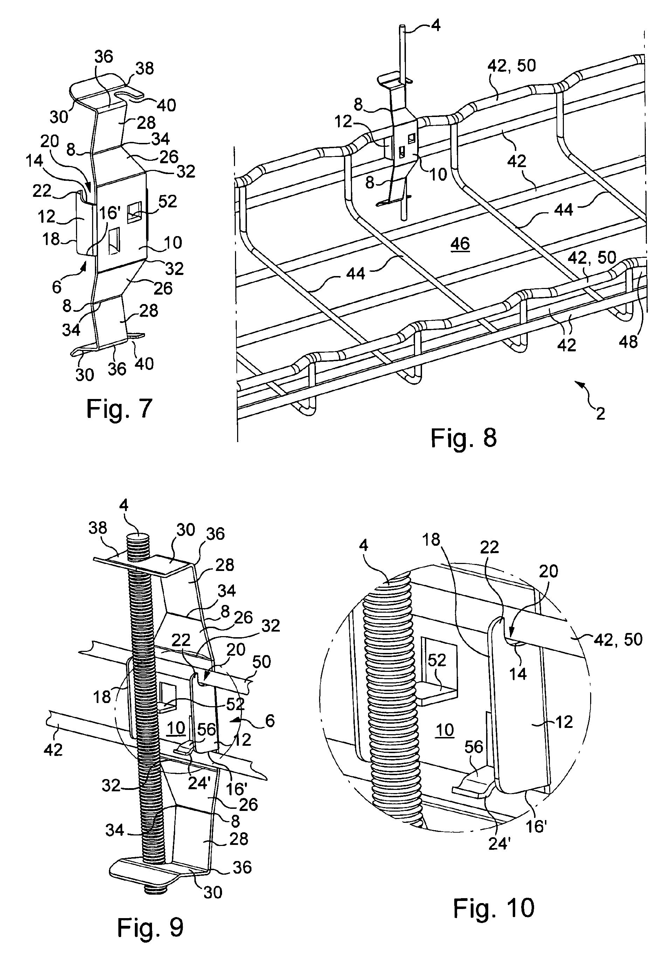

La forme de réalisation préférée d'un dispositif de fixation selon la présente invention représentée sur les figures 7 à 10 est proche dans son aspect de la première forme de réalisation montrée sur les figures 1 à 4. Par rapport à la première forme de réalisation, cette quatrième forme de réalisation propose une seconde surface différente. Alors que dans la première forme de réalisation (figures 1 à 4), la seconde surface de support est formée par les bords inférieurs 16 des bras supports 12, dans cette quatrième forme de réalisation (figures 7 à 10), une patte 56 est utilisée pour former cette seconde surface de support.

Par rapport à la première forme de réalisation, la quatrième forme de réalisation (figures 7 à 10) se distingue d'une part par le fait que les bras supports 12 présentent une hauteur moindre si bien que leur bord inférieur 16' ne vient plus au contact d'un fil de chaîne 42 dans la position montée illustrée sur les figures 8 à 10 et d'autre part par la présence d'au moins une patte 56. Cette dernière est obtenue par découpe dans le dos 10 du corps 6 du dispositif -comme la languette 52- et est pliée d'une part pour venir en position sensiblement horizontale et d'autre part pour être conformée de manière à présenter une face concave comme décrit précédemment ainsi que le bossage 24'.

La patte 56, en conservant l'orientation prévue plus haut pour la première forme de réalisation, est disposée sensiblement horizontalement. Elle présente une concavité sur sa face inférieure de manière à mieux pouvoir venir au contact d'un fil de chaîne 42 inférieur. Comme représenté aux dessins, sur les figures 9 et 10, on remarque que la patte 56 présente un bossage 24'. Ceci permet de réaliser un montage avec encliquetage, comme pour le premier mode de réalisation.

Le montage de ce quatrième dispositif de fixation est similaire au montage du premier dispositif de fixation des figures 1 à 4. Le dispositif de fixation est disposé à l'intérieur du tronçon de chemin de câbles 2 et un fil de chaîne 42, éventuellement un fil de rive 50, est placé dans les encoches 20 des bras supports 12. Le dispositif de fixation est pivoté autour du fil de chaîne (42 ou 50), appelé fil de chaîne supérieur de telle sorte que la patte 56 vienne s'encliqueter sur le fil de chaîne voisin, ou fil de chaîne inférieur. Le bossage 24' permet de réaliser un encliquetage.

Par rapport au premier mode de réalisation, ce quatrième mode de réalisation permet, grâce notamment à l'élasticité de la patte 56, d'une part de réaliser un bon support avec des tolérances sur la distance séparant deux fils de chaîne d'un bord latéral plus importantes et d'autre part de faciliter le retrait du tronçon de chemin de câbles 2 du dispositif de fixation, en agissant sur la patte 56.

L'ensemble formé par le tronçon de chemin de câbles 2 et le dispositif de fixation des figures 7 à 10 se monte sur la tige filetée 4 de la même manière qu'avec le dispositif de fixation des figures 1 à 4.

Les diverses formes de réalisation décrites ci-dessus et représentées aux dessins permettent de raccorder rapidement et facilement, sans utilisation d'aucun outil ni de visserie, un tronçon de chemin de câbles sur une tige filetée. En outre, un réglage continu de la position du tronçon de chemin de câbles par rapport à la tige filetée est possible.

Le dispositif de fixation selon l'invention, dans ses différentes formes de réalisation, permet de résoudre le problème du montage fastidieux d'un chemin de câbles sur une tige filetée. En outre, dans les formes de réalisation représentées aux dessins et décrites ci-dessus, le dispositif de fixation peut être pré-monté sur le chemin de câbles, pouvant ainsi rester en place sans risque de tomber le temps de raccorder le chemin de câbles à la tige filetée.

Les formes de réalisation décrites ci-dessus permettent également, dans la position montée, de ne pas être agressives pour les câbles, et similaires, disposés dans le chemin de câbles. En effet, dans les formes représentées, le dos du dispositif de fixation est plaqué contre la paroi latérale du chemin de câbles à l'intérieur de celui-ci mais sans former une saillie agressive dans le chemin de câbles.

Ces formes de réalisation sont particulièrement adaptées à la fixation d'un chemin de câbles en fils. Le dispositif de fixation est en effet conçu pour porter directement un tronçon de chemin de câbles et aucune pièce intermédiaire n'est nécessaire.

Des dispositifs de fixation selon l'invention permettent aussi de réaliser un montage en balancelle. En effet, si on a une tige filetée de chaque côté d'un chemin de câbles, on peut relier le chemin de câbles à chaque tige filetée directement par un dispositif de fixation tel que décrit ci-dessus. Des charges relativement lourdes peuvent alors prendre place dans le chemin de câbles.

La présente invention ne se limite pas aux formes de réalisation décrites ci-dessus à titre d'exemples non limitatifs. Elle concerne également toutes les autres variantes de réalisation à la portée de l'homme du métier dans le cadre des revendications ci-après.

Ainsi par exemple, les deux bras élastiques ne se trouvent pas forcément d'un côté et de l'autre du corps portant les moyens de support du tronçon de chemin de câbles. On pourrait avoir d'un même côté de ce corps deux bras élastiques formant entre eux un V, chaque bras présentant une encoche. Par élasticité des bras, on arrive de la même manière à réaliser une fixation sur une tige filetée.

## Revendications

1. Dispositif de fixation d'un chemin de câbles en fils sur une tige filetée (4), **caractérisé en ce qu'**il comporte :
- un corps (6) avec des moyens de support (12 ; 54 ; 12') présentant une première surface de support et une seconde surface de support opposée à la première surface de support,
- des moyens de fixation sur une tige filetée (4) comportant deux bras élastiques (8) munis chacun d'une encoche (40), dite première encoche, dont le fond est destiné à coopérer avec le filetage de la tige filetée (4) afin d'assurer un blocage du dispositif de fixation sur la tige filetée (4).

2. Dispositif de fixation selon la revendication 1, **caractérisé en ce que** les deux bras (8) s'étendent chacun à partir du corps (6), dans des directions opposées.

3. Dispositif de fixation selon la revendication 2, **caractérisé en ce que** le corps (6) présente un dos (10) sensiblement plan, **en ce que** chaque bras présente une partie sensiblement plane inclinée (26) par rapport au dos, et **en ce que** l'extrémité libre de chaque bras présente une partie sensiblement plane (30) s'étendant dans un plan sensiblement perpendiculaire au dos (10), cette dernière partie portant une première encoche (40).

4. Dispositif de fixation selon la revendication 3, **caractérisé en ce que** chaque bras présente une partie sensiblement plane (28) et sensiblement parallèle au dos (10) entre la partie inclinée (26) et la partie perpendiculaire (30) au dos (10).

5. Dispositif selon l'une des revendications 3 ou 4, **caractérisé en ce que** les premières encoches (40) sont orientées vers le dos (10) du corps.

6. Dispositif de fixation selon l'une des revendications 2 à 5, **caractérisé en ce que** les deux bras sont symétriques par rapport au corps (6).

7. Dispositif de fixation selon l'une des revendications 1 à 6, **caractérisé en ce qu'**il est réalisé à partir d'une tôle découpée et pliée.

8. Dispositif de fixation selon la revendication 7, **caractérisé en ce que** le corps (6) comporte un dos (10) sensiblement plan, deux retours (12) parallèles s'étendant perpendiculairement au dos (10) sensiblement plan de manière à former les deux surfaces de support.

9. Dispositif de fixation selon la revendication 8, **caractérisé en ce que** chacun des deux retours (12) présente à une extrémité une encoche (20), dite seconde encoche, destinée à recevoir un fil de chaîne (42, 50) d'un tronçon de chemin de câbles (2), et **en ce que** l'extrémité opposée de chaque retour (12) présente un bossage (24) permettant de réaliser un point dur pour réaliser un encliquetage.

10. Dispositif de fixation selon la revendication 7, **caractérisé en ce que** le corps (6) comporte :
- un dos (10) sensiblement plan,
- au moins un retour (12) s'étendant perpendiculairement au dos (10) et présentant à une extrémité une seconde encoche (20) destinée à recevoir un fil de chaîne (42, 50) de manière à former la première surface de support, et
- au moins une patte (56) s'étendant à partir du dos (10) de manière à former la seconde surface de support.

11. Dispositif de fixation selon la revendication 7, **caractérisé en ce que** le corps (6) comporte un dos (10) sensiblement plan dans lequel sont découpées au moins deux languettes (54) qui sont repliées de manière à former des surfaces de support en formant un V avec le dos (10).

12. Dispositif selon l'une des revendications 1 à 11, **caractérisé en ce qu'**il comporte en outre une languette d'appui (52) pliable disposée sensiblement dans l'alignement des deux premières encoches (40) et pliée de telle sorte que son extrémité libre vienne coopérer avec le filetage de la tige filetée (4) pour réaliser un troisième appui, à l'opposé des appuis réalisés sur la tige filetée (4) au niveau des premières encoches (40).

13. Ensemble formé par un dispositif de fixation et un tronçon de chemin de câbles (2) en fils comportant des fils de chaîne (42) longitudinaux et des fils de trame (44) transversaux reliant les fils de chaîne (42), le chemin de câbles (2) en fils présentant un fond destiné à recevoir des câbles électriques ou similaires et deux ailes latérales présentant chacune au moins deux fils de chaîne, **caractérisé en ce que** le dispositif de fixation est un dispositif de fixation selon l'une des revendications 1 à 12, et en ce ledit dispositif de fixation est monté entre deux fils de chaîne (42) voisins d'une aile latérale du chemin de câbles.
